# FASCICULE DE BREVET EUROPEEN

(11) **EP 3 915 365 B1**
(45) Date de publication et mention de la délivrance du brevet: **23.11.2022**
(21) Numéro de dépôt: 21174127.7
(22) Date de dépôt: 17.05.2021
(51) Int. Cl.: A01M 7/00

(54) **PANNEAU RECUPERATEUR POUR SYSTEME DE PULVERISATION AGRICOLE**
AUFFANGPLATTE FÜR LANDWIRTSCHAFTLICHES SPRÜHSYSTEM
RECOVERY PANEL FOR AGRICULTURAL SPRAYING SYSTEM

(30) Priorité: 28.05.2020 FR 2005624
(43) Date de publication de la demande: 01.12.2021
(73) Titulaire: Exel Industries, 51200 Epernay (FR)
(72) Inventeur: MONCHANIN, Raphaël, 75009 PARIS (FR); LOIGEROT, Xavier, 75009 PARIS (FR); COSTES, Julien, 75009 PARIS (FR)
(74) Mandataire: Argyma

(56) Documents cités:
- EP-A1- 3 488 692
- FR-A1- 2 969 902
- US-A- 5 897 057

## Description

### DOMAINE TECHNIQUE

L'invention concerne un panneau récupérateur pour système de pulvérisation agricole, notamment viticole ou arboricole, un système de pulvérisation agricole comprenant au moins un tel panneau récupérateur, ainsi qu'un engin agricole comprenant un tel système de pulvérisation agricole.

### ÉTAT DE LA TECHNIQUE ANTÉRIEURE

L'art antérieur, par exemple US 5 897 057, décrit des systèmes de pulvérisation agricole pour engin agricole, notamment viticole ou arboricole, comprenant des panneaux récupérateurs agencés face à face, deux par deux.

Ces panneaux récupérateurs comprennent une pluralité d'ensembles de pulvérisation par l'intermédiaire desquels du liquide de traitement, tel que du produit phytosanitaire ou de l'engrais liquide, est pulvérisé sur des végétaux à traiter agencés entre deux panneaux récupérateurs se faisant face. Pour cela, des diffuseurs d'air sont prévus pour produire un flux d'air qui porte ou souffle le liquide de traitement vers les végétaux à traiter.

Chacun de ces panneaux récupérateurs comprend aussi un bac récupérateur formant la base du panneau récupérateur et comprenant une ouverture de récupération, orientée vers le haut, par l'intermédiaire de laquelle le bac récupérateur récupère du liquide de traitement pulvérisé en surplus sur les végétaux à traiter, notamment par le panneau récupérateur qui lui fait face. Le liquide de traitement ainsi récupéré par le bac récupérateur peut être aspiré pour être pulvérisé à nouveau sur les végétaux à traiter, par exemple au moyen d'une pompe reliée au bac récupérateur par l'intermédiaire d'un circuit d'aspiration.

Or, lorsque du liquide de traitement est pulvérisé sur les végétaux à traiter, des déchets végétaux, tels que des résidus de feuilles, des capuchons floraux ou encore des brindilles, peuvent être arrachés des végétaux à traiter et venir s'accumuler dans le bac récupérateur.

Cette accumulation de déchets végétaux pose problème car elle limite le volume de liquide de traitement qui peut être récupéré dans le bac récupérateur, ce qui peut conduire à un débordement du bac récupérateur. Elle peut encore entraver l'aspiration du liquide de traitement récupéré pour le pulvériser à nouveau, ce qui peut aussi conduire au débordement du bac récupérateur.

Afin d'éviter ces problèmes, il est par exemple connu d'équiper le bac récupérateur d'une grille de filtrage occupant l'ouverture de récupération, de manière à récupérer les déchets végétaux sur sa surface supérieure, opposée au bac récupérateur, tandis que le liquide de traitement s'écoule à travers la grille de filtrage jusqu'au bac récupérateur, et de moyens pour extraire ces déchets végétaux de la surface supérieure de la grille de filtrage. Ces moyens évitent une accumulation des déchets végétaux sur la grille de filtrage, ce qui peut entraver l'écoulement du liquide de traitement vers le bac récupérateur, mais aussi entraîner un écoulement de liquide de traitement chargé de particules provenant des déchets végétaux vers le bac récupérateur, et ainsi colmater le circuit d'aspiration vers la pompe.

Toutefois, ces moyens nécessitent souvent de faire intervenir un opérateur, notamment l'agriculteur conduisant l'engin agricole, ce qui implique de faire descendre l'agriculteur de la cabine de l'engin agricole et de l'exposer au liquide de traitement récupéré. La cabine de l'engin agricole peut alors être contaminée avec du liquide de traitement. Cette situation n'est pas acceptable pour la santé de l'agriculteur.

### EXPOSÉ DE L'INVENTION

Pour résoudre ce problème, la présente invention propose un panneau récupérateur comprenant un bac récupérateur comprenant lui-même une ouverture de récupération occupée par une grille de filtrage, et au moins un orifice de soufflage conçu pour produire un jet d'air balayant une surface supérieure de la grille de filtrage, opposée au bac récupérateur, de manière à souffler sur des déchets végétaux retenus sur la surface supérieure de ladite grille de filtrage.

Plus précisément, l'invention a pour objet un panneau récupérateur pour système de pulvérisation agricole, le panneau récupérateur s'étendant globalement suivant une direction verticale, du bas vers le haut, entre une base et un sommet, et comprenant :
- un conduit d'air comprenant un orifice d'entrée d'air par l'intermédiaire duquel le conduit d'air est alimenté en air,
- un bac récupérateur formant la base du panneau récupérateur et comprenant une ouverture de récupération par l'intermédiaire de laquelle le bac récupérateur est destiné à récupérer du liquide de traitement pulvérisé en surplus sur les végétaux à traiter, l'ouverture de récupération s'étendant autour d'un axe globalement vertical et étant orientée vers le haut, l'ouverture de récupération étant en outre occupée, au moins en partie, par une grille de filtrage conçue pour autoriser la circulation de liquide de traitement pulvérisé en surplus vers le bac récupérateur et pour retenir des déchets végétaux sur une surface supérieure de la grille de filtrage, qui est verticalement opposée au bac récupérateur,
- au moins un orifice de soufflage communiquant avec le conduit d'air ou un conduit d'air supplémentaire et conçu pour produire un jet d'air balayant la surface supérieure de la grille de filtrage, de manière à souffler sur les déchets végétaux retenus sur la surface supérieure de la grille de filtrage.

Selon des variantes qui peuvent être prises ensemble ou séparément :
- la surface supérieure de la grille de filtrage est située en dessous du ou des orifices de soufflage et affleure le ou les orifices de soufflage ;
- l'ouverture de récupération est délimitée par un rebord comprenant une première et une deuxième portions de rebord s'étendant globalement suivant une direction longitudinale horizontale, en parallèle l'une de l'autre, la première portion de rebord étant agencée en regard du ou des orifices de soufflage, la deuxième portion de rebord étant libre ;
- la grille de filtrage occupe l'ouverture de récupération suivant une direction transversale horizontale, perpendiculaire à la direction longitudinale, depuis la première portion de rebord jusqu'à la deuxième portion de rebord ;
- le ou les orifices de soufflage sont conçus pour produire un jet d'air orienté globalement transversalement, balayant la surface supérieure de la grille de filtrage, de manière à souffler sur les déchets végétaux retenus par la surface supérieure de la grille de filtrage, depuis la première portion de rebord vers la deuxième portion de rebord libre de l'ouverture de récupération, et ainsi évacuer les déchets végétaux ;
- la grille de filtrage comprend un premier et un deuxième bords s'étendant globalement longitudinalement, en parallèle l'un de l'autre, et reliés transversalement l'un à l'autre par la surface supérieure, le premier bord de la grille de filtrage étant agencé en regard de la première portion de rebord, le deuxième bord de la grille de filtrage étant agencé en regard de la deuxième portion de rebord ;
- les orifices de soufflage sont répartis le long du premier bord de la grille de filtrage ;
- le ou chaque orifice de soufflage s'étend autour d'un axe de soufflage orienté globalement transversalement ;
- le panneau récupérateur comprend au moins un ensemble de pulvérisation conçu pour pulvériser un liquide de traitement sur des végétaux à traiter,
- le ou chaque ensemble de pulvérisation comprend un diffuseur d'air communiquant avec le conduit d'air et conçu pour produire un flux d'air portant ou soufflant le liquide de traitement sur les végétaux à traiter ;
- le conduit d'air est au moins en partie formé à l'intérieur d'une partie structurelle du panneau récupérateur;
- le conduit d'air comprend une première conduite d'air communiquant d'une part avec l'orifice d'entrée d'air et d'autre part avec le ou les diffuseurs d'air, et une deuxième conduite d'air communiquant d'une part avec l'orifice d'entrée d'air, en parallèle de la première conduite d'air, et d'autre part avec le ou les orifices de soufflage ;
- le panneau récupérateur comprend en outre un obturateur qui est mobile par rapport à la partie structurelle et qui est agencé à l'intérieur du conduit d'air, l'obturateur étant en outre conçu pour sélectivement occuper une position de pulvérisation dans laquelle l'obturateur libère la première conduite d'air et obture la deuxième conduite d'air, en amont du ou des orifices de soufflage, et une position de soufflage des déchets végétaux dans laquelle l'obturateur obture la première conduite d'air, en amont du ou des ensembles de pulvérisation, et libère la deuxième conduite d'air ;
- l'obturateur comprend un volet monté pivotant sur la partie structurelle, à l'intérieur du conduit d'air, autour d'un axe de pivotement, entre la position de pulvérisation et la position de soufflage des végétaux ;
- le panneau récupérateur comprend un actionneur conçu pour entraîner l'obturateur en déplacement par rapport à la partie structurelle entre la position de pulvérisation et la position de soufflage des déchets végétaux.

L'invention a aussi pour objet un système de pulvérisation agricole pour engin agricole, comprenant au moins un panneau récupérateur tel que précédemment décrit.

L'invention a encore pour objet un engin agricole comprenant un système de pulvérisation agricole tel que précédemment décrit.

Selon des variantes qui peuvent être prises ensemble ou séparément :
- l'engin agricole comprend une unité de commande conçue pour commander l'actionneur de déplacer l'obturateur de la position de pulvérisation à la position de soufflage des déchets végétaux et/ou de la position de soufflage des déchets végétaux à la position de pulvérisation ;
- l'unité de commande est conçue pour commander l'actionneur de déplacer l'obturateur de la position de pulvérisation à la position de soufflage des déchets végétaux et/ou de la position de soufflage des déchets végétaux à la position de pulvérisation, lorsque l'unité de commande reçoit une commande envoyée par un opérateur au moyen d'une interface utilisateur reliée à ladite unité de commande ;
- l'unité de commande est conçue pour :
   ∘ détecter une anomalie de fonctionnement de l'obturateur et/ou de l'actionneur du ou d'un des panneaux récupérateur, au moyen d'un premier dispositif de détection monté sur le ou sur chacun des panneaux récupérateur, lorsque l'obturateur dudit panneau récupérateur n'occupe ni la position de pulvérisation, ni la position de soufflage des déchets végétaux ou que l'obturateur dudit panneau récupérateur occupe l'une des positions de pulvérisation et de soufflage des déchets végétaux, alors que l'unité de commande a commandé l'actionneur dudit panneau récupérateur de déplacer l'obturateur de l'une des positions de pulvérisation et de soufflage des déchets végétaux à l'autre des positions de pulvérisation et de soufflage des déchets végétaux, et
   ∘ envoyer une alerte à un opérateur au moyen d'une interface utilisateur reliée à l'unité de commande, lorsqu'une anomalie de fonctionnement de l'obturateur et/ou de l'actionneur dudit panneau récupérateur est ainsi détectée ;
- l'engin agricole comprend une unité de commande et un deuxième dispositif de détection des déchets végétaux monté sur le ou l'un au moins des panneaux récupérateurs, le ou chaque deuxième dispositif de détection des déchets végétaux étant conçu pour envoyer un signal de détection à l'unité de commande, lorsque ledit deuxième dispositif de détection des déchets végétaux détecte des déchets végétaux retenus sur la surface supérieure de la grille de filtrage du panneau récupérateur sur lequel le deuxième dispositif de détection des déchets végétaux est monté, à une hauteur, prise par rapport à la surface supérieure de la grille de filtrage, supérieure ou égale à une hauteur seuil, l'unité de commande étant conçue pour envoyer une alerte à un opérateur au moyen d'une interface utilisateur reliée à ladite unité de commande, lorsque l'unité de commande reçoit un signal de détection du deuxième dispositif de détection des déchets végétaux.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est une vue en perspective d'un panneau récupérateur pour système de pulvérisation agricole, selon un mode de réalisation de l'invention ;
- la figure 2 est une vue de détail d'une face de pulvérisation du panneau récupérateur illustré à la figure 1 ;
- la figure 3 est une vue en coupe, verticale et longitudinale, du panneau récupérateur illustré à la figure 1, sur laquelle un obturateur du panneau récupérateur occupe une position de pulvérisation ;
- la figure 4 est une vue en coupe, verticale et longitudinale, du panneau récupérateur illustré à la figure 1, sur laquelle l'obturateur du panneau récupérateur occupe une position de soufflage des déchets végétaux ;
- la figure 5 est une vue de détail de la figure 3 ;
- la figure 6 est une vue de dessus, schématique, d'un engin agricole comprenant un système de pulvérisation pourvu du panneau récupérateur illustré aux figures 1 à 5.

### DESCRIPTION DETAILLEE

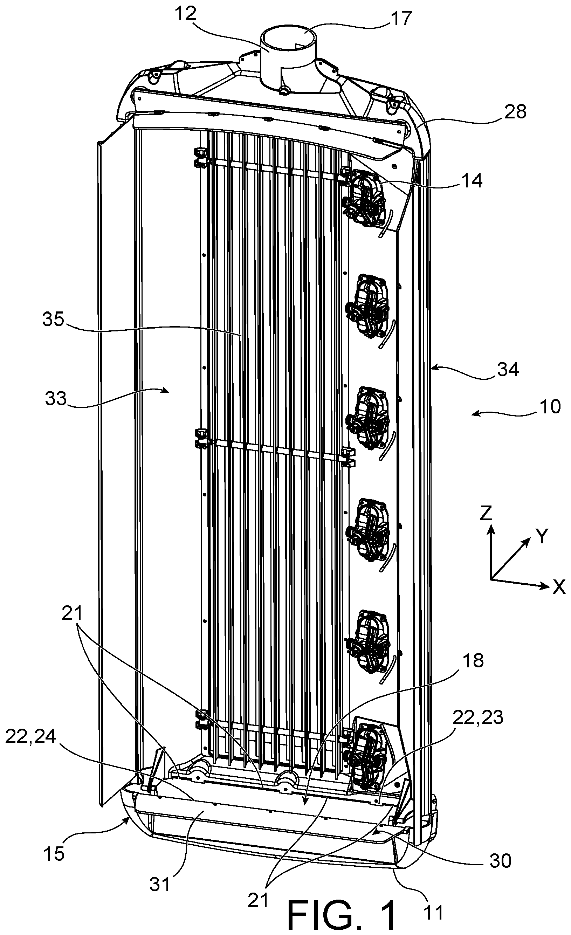

Les figures 1 à 5 montrent un panneau récupérateur 10 pour système de pulvérisation agricole, notamment viticole ou arboricole, selon un mode de réalisation de l'invention.

Dans la suite de la description, il est adopté à titre non limitatif un repère global comportant une direction longitudinale X orientée d'arrière en avant dans le sens d'avancement du panneau récupérateur 10, une direction transversale Y orientée de droite à gauche, et une direction verticale Z orientée de bas en haut. Les directions longitudinale X et transversale Y sont horizontales et sensiblement parallèles à un sol.

Le panneau récupérateur 10 s'étend globalement suivant la direction verticale Z, du bas vers le haut, entre une base 11 et un sommet 12 (figure 1).

Le panneau récupérateur 10 comprend en outre un conduit d'air 13, ainsi qu'un bac récupérateur 15 (figures 1, 3, 4 et 5). Le panneau récupérateur 10 peut aussi comprendre au moins un ensemble de pulvérisation 14.

Le conduit d'air 13 comprend un orifice d'entrée d'air 17 par l'intermédiaire duquel le conduit d'air 13 est alimenté en air, notamment en air sous pression (figures 1 et 3 à 4). L'orifice d'entrée d'air 17 forme par exemple le sommet 12 du panneau récupérateur 10. L'orifice d'entrée d'air 17 peut encore s'étendre autour d'un axe globalement vertical.

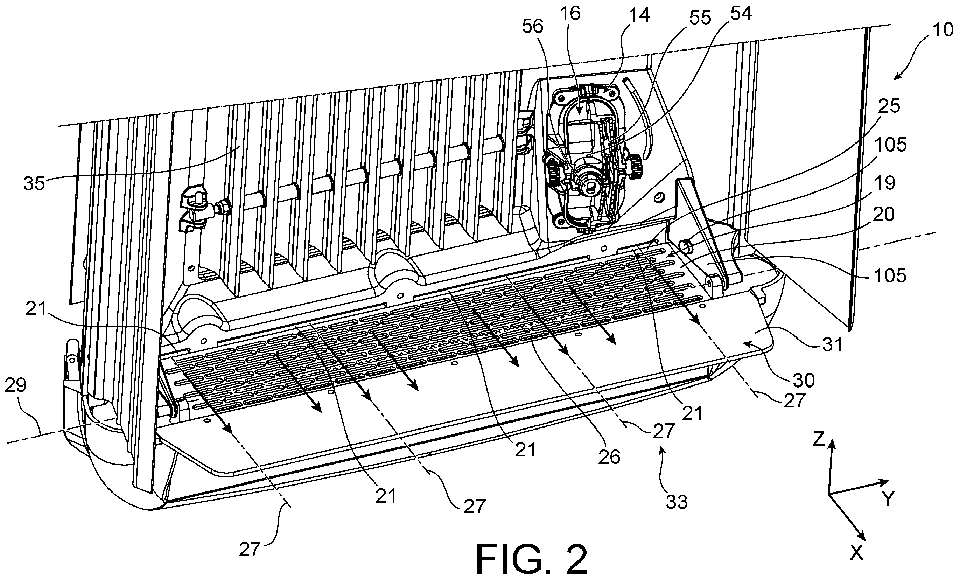

Le ou chacun des ensembles de pulvérisation 14 est conçu pour pulvériser du liquide de traitement sur des végétaux à traiter (figures 1 et 2).

Il est entendu par « liquide » que le produit pulvérisé par le ou les ensembles de pulvérisation comprend une phase liquide. Il présente par exemple la forme d'une solution ou encore d'une suspension. Il s'agit par exemple de produit phytosanitaire ou d'engrais liquide.

Le ou chaque ensemble de pulvérisation 14 peut en outre comprendre un diffuseur d'air 16 communiquant avec le conduit d'air 13, de manière à être alimenté en air par le conduit d'air 13 (figure 2). Le ou les diffuseurs d'air 16 forment ainsi des premières sorties d'air du conduit d'air 13. Le ou chaque diffuseur d'air 16 est en outre conçu pour produire un flux d'air portant ou soufflant le liquide de traitement sur les végétaux à traiter.

Le bac récupérateur 15 forme la base 11 du panneau récupérateur 10. Il comprend une ouverture de récupération 18 (figure 1) par l'intermédiaire de laquelle le bac récupérateur 15 est destiné à récupérer du liquide de traitement pulvérisé en surplus sur les végétaux à traiter, notamment par un autre panneau récupérateur 10 agencé en face du panneau récupérateur 10 suivant la direction transversale Y comme cela sera expliqué plus en détail dans la suite de la description. Pourcela, l'ouverture de récupération 18 s'étend autour d'un axe globalement vertical et est orientée vers le haut.

L'ouverture de récupération 18 est en outre occupée, au moins en partie, par une grille de filtrage 19 conçue pour autoriser la circulation de liquide de traitement pulvérisé en surplus vers le bac récupérateur 15 et pour retenir des déchets végétaux, tels que des résidus de feuilles, des capuchons floraux ou encore des brindilles, sur une surface supérieure 20 de la grille de filtrage 19, qui est verticalement opposée au bac récupérateur 15 (figure 2). La grille de filtrage 19 permet ainsi de séparer le liquide de traitement pulvérisé en surplus et les déchets végétaux qui ont été arrachés des végétaux à traiter pendant leur pulvérisation. Le liquide de traitement est ainsi récupéré dans le bac récupérateur 15, tandis que les déchets végétaux sont retenus par la grille de filtrage 19 et reposent sur la surface supérieure 20 de la grille de filtrage 19.

Le panneau récupérateur 10 comprend encore au moins un orifice de soufflage 21 communiquant avec le conduit d'air 13, de manière à être alimenté en air par le conduit d'air 13 (figures 1 et 2). De cette manière, le conduit d'air 13 alimente le ou les orifices de soufflage 21 en air provenant de l'orifice d'entrée d'air 17. Le ou les orifices de soufflage 21 peuvent ainsi former des sorties d'air du conduit d'air 13 ou des deuxièmes sorties d'air du conduit d'air 13, lorsque le conduit d'air 13 alimente aussi le ou les diffuseurs d'air 16 en air.

Le ou chaque orifice de soufflage 21 est conçu pour produire un jet d'air balayant la surface supérieure 20 de la grille de filtrage 19, de manière à souffler sur les déchets végétaux retenus sur la surface supérieure 20 de la grille de filtrage 19.

De cette manière, le ou les orifices de soufflage 21 permettent soit de regrouper les déchets végétaux au même endroit sur la surface supérieure 20 de la grille de filtrage 19, requérant ainsi des interventions moins fréquentes d'un opérateur, notamment d'un agriculteur, pour évacuer les déchets végétaux de la surface supérieure 20 de la grille de filtrage 19, soit d'évacuer directement les déchets végétaux de la surface supérieure 20 de la grille de filtrage 19, aucune intervention de l'agriculteur n'étant alors nécessaire. Cela permet de limiter l'exposition de l'agriculteur au liquide de traitement, ce qui est plus acceptable pour sa santé.

En variante (non représentée), le ou les orifices de soufflage 21 communiquent avec un conduit d'air supplémentaire, qui est par exemple alimenté en air, notamment en air sous pression, au moyen d'une soufflante. Le conduit d'air 13 et le conduit d'air supplémentaire sont alimentés en air séparément l'un de l'autre. Autrement dit, le conduit d'air 13 et le conduit d'air supplémentaire sont alimentés en air par des sources d'air différentes, notamment par des soufflantes différentes.

La surface supérieure 20 de la grille de filtrage 19 est par exemple située en dessous du ou des orifices de soufflage 21 et affleure le ou les orifices de soufflage 21, de sorte que le jet d'air produit par le ou les orifices de soufflage 21 balaie la surface supérieure 20. Il est entendu par « affleure » que la distance entre la surface supérieure 20 de la grille de filtrage 19 et le ou les orifices de soufflage 21 est faible ou nulle, par exemple comprise entre 0 et 20mm compris. On comprendra toutefois que la distance entre la surface supérieure 20 de la grille de filtrage 19 et le ou les orifices de soufflage 21 dépend plus généralement du profil du jet d'air produit par le ou les orifices de soufflage 21. Un profil de jet d'air plus conique autorisera une distance plus grande entre la surface supérieure 20 et le ou les orifices de soufflage 21 pour assurer le balayage de la surface supérieure 20. Un profil de jet d'air plus cylindrique autorisera au contraire une distance moins grande entre la surface supérieure 20 et le ou les orifices de soufflage 21 pour assurer le balayage de la surface supérieure 20.

La surface supérieure 20 de la grille de filtrage 19 est par exemple plane, de manière à faciliter son balayage par le jet d'air produit par le ou les orifices de soufflage 21 (figure 2). Un axe de soufflage 27 autour duquel le ou chaque orifice de soufflage 21 s'étend, peut être sensiblement coplanaire avec la surface supérieure 20 de la grille de filtrage 19. En variante (non représentée), l'axe de soufflage 27 du ou des orifices de soufflage 21 est incliné vers le bas vers la surface supérieure 20 de la grille de filtrage 19.

L'ouverture de récupération 18 est par exemple délimitée par un rebord 22 comprenant une première et une deuxième portions de rebord 23, 24 s'étendant globalement longitudinalement, en parallèle l'une de l'autre (figure 1). La première portion de rebord 23 est agencée en regard du ou des orifices de soufflage 21, tandis que la deuxième portion de rebord 24 est libre. La grille de filtrage 19 occupe en outre transversalement l'ouverture de récupération 18, depuis la première portion de rebord 23 jusqu'à la deuxième portion de rebord 24.

Pour cela, la grille de filtrage 19 comprend par exemple un premier et un deuxième bords 25, 26 s'étendant globalement longitudinalement, en parallèle l'un de l'autre, et reliés transversalement l'un à l'autre par la surface supérieure 20 (figure 2). Le premier bord 25 de la grille de filtrage 19 est agencé en regard de la première portion de rebord 23, tandis que le deuxième bord 26 de la grille de filtrage 19 est agencé en regard de la deuxième portion de rebord 24. Le premier bord 25 de la grille de filtrage 19 peut être verticalement aligné avec la première portion de rebord 23. La surface supérieure 20 de la grille de filtrage 19 peut, en variante, s'étendre sous la première portion de rebord 23, la première portion de rebord 23 étant transversalement interposée entre le premier et le deuxième bords 25, 26 de la grille de filtrage 19. Le premier bord 25 ou la surface supérieure 20 de la grille de filtrage 19 épouse par exemple la forme de la première portion de rebord 23. Le deuxième bord 26 de la grille de filtrage 19 épouse la forme de ou recouvre au moins en partie la deuxième portion de rebord 24.

Le ou les orifices de soufflage 21 peuvent encore être conçus pour produire un jet d'air orienté globalement transversalement, balayant la surface supérieure 20 de la grille de filtrage 19, de manière à souffler sur les déchets végétaux retenus par la surface supérieure 20 de la grille de filtrage 19, depuis la première portion de rebord 23 vers la deuxième portion de rebord 24 libre de l'ouverture de récupération 18, notamment vers le deuxième bord 26 de la grille de filtrage 19, et ainsi évacuer les déchets végétaux de la grille de filtrage 19 et du panneau récupérateur 10.

Pour cela, les orifices de soufflage 21 peuvent être répartis, de manière régulière ou non, le long du premier bord 25 de la grille de filtrage 19 (figure 2). Les orifices de soufflage 21 sont par exemple répartis suivant toute la longueur du premier bord 25 de la grille de filtrage 19, de manière à opérer un balayage globalement homogène de la surface supérieure 20 de la grille de filtrage 19 par les jets d'air produits par les orifices de soufflage 21. Il est entendu par « longueur » la dimension du premier bord 25 de la grille de filtrage 19 suivant la direction longitudinale X. Un axe de soufflage 27 autour duquel le ou chaque orifice de soufflage 21 s'étend, peut être compris dans un plan globalement vertical, sécant avec la direction longitudinale X. Le ou chacun des axes de soufflage 27 est par exemple compris dans un plan globalement vertical et transversal. Le ou chacun des axes de soufflage 27 peut en outre être orienté globalement transversalement ou être inclinés vers le bas vers la surface supérieure 20 de la grille de filtrage 19. Les plans globalement verticaux dans lesquels les axes de soufflage 27 sont compris, peuvent être parallèles entre eux, ou au contraire être sécants entre eux. Chacun des plans verticaux dans lesquels les axes de soufflage 27 sont compris, peut encore former avec la direction longitudinale X un angle égal ou différent de celui formé entre un, plusieurs ou les autres plans verticaux et la direction longitudinale X. Les plans verticaux dans lesquels les axes de soufflage 27 sont compris, peuvent par exemple être agencés en éventail, rayonnant chacun depuis une droite globalement verticale.

La surface supérieure 20 de la grille de filtrage 19 est par exemple inclinée par rapport à l'horizontale, du haut vers le bas, depuis le premier bord 25 vers le deuxième bord 26 de la grille de filtrage 19, de manière à favoriser l'évacuation des déchets végétaux qui sont entraînés vers le deuxième bord 26 sous l'effet de leur propre poids (figure 2). La surface supérieure 20 de la grille de filtrage 19 est par exemple inclinée par rapport à l'horizontale d'un angle inférieur ou égal à 5°. En variante (non représentée), la surface supérieure 20 de la grille de filtrage 19 est sensiblement horizontale.

Le ou chaque orifice de soufflage 21 forme par exemple une fente s'étendant globalement suivant la direction longitudinale X. Chaque fente formant l'un des orifices de soufflage 21 peut présenter une longueur égale à la longueur d'au moins une autre fente et/ou différente à la longueur d'au moins une autre fente. Il est entendu par « longueur » la dimension de la ou des fentes formant le ou les orifices de soufflage 21 suivant la direction longitudinale X.

La ou les fentes formant le ou les orifices de soufflage 21 sont par exemple définies par la première portion de rebord 23 de l'ouverture de récupération 18, ladite première portion de rebord 23 présentant par exemple à cet effet une ou plusieurs échancrures, qui peuvent être sous la forme de créneaux, et par le premier bord 25 de la grille de filtrage 19 ou par la surface supérieure 20 de la grille de filtrage 19. En variante (non représentée), la ou les fentes formant le ou les orifices de soufflage 21 sont définies par des rainures qui sont par exemple usinées dans la partie structurelle 28 du panneau récupérateur.

En variante (non représentée), le ou chaque orifice de soufflage 21 présente par exemple une section, prise perpendiculairement à un axe de soufflage 27 autour duquel l'orifice de soufflage 21 s'étend, de forme circulaire (figure 2). D'autres formes peuvent bien sûr aussi être prévues, telles que des formes oblongues.

La grille de filtrage 19 peut présenter la forme d'une paroi ajourée (figure 2) ou encore d'un grillage.

La grille de filtrage 19 peut encore être monté pivotante sur une partie structurelle 28 du panneau récupérateur 10, autour d'un axe de pivotement 29, entre une position obturée dans laquelle la grille de filtrage 19 occupe, au moins en partie, l'ouverture de récupération 18 et une position libérée dans laquelle la grille de filtrage 19 libère l'ouverture de récupération 18, laissant ainsi libre accès au bac récupérateur 15, notamment pour son nettoyage (figure 2). Bien sûr, dans la description qui précède, la grille de filtrage 19 est décrite dans la position d'obturation. L'axe de pivotement 29 est par exemple orienté globalement longitudinalement. La grille de filtrage 19 peut encore être montée pivotante sur la partie structurelle 28 par l'intermédiaire de son deuxième bord 26.

En variante (non représentée), la grille de filtrage 19 est montée sur la partie structurelle 28 du panneau récupérateur 10 de manière réversible. La grille de filtrage 19 est donc démontable, permettant ainsi de libérer l'accès au bac récupérateur 15, notamment pour son nettoyage.

Le panneau récupérateur 10 peut aussi comprendre une paroi de récupération 30 s'étendant globalement transversalement depuis la deuxième portion de rebord 24 de l'ouverture de récupération 18, dans un sens opposé à la première portion de rebord 23 de l'ouverture de récupération 18 (figures 1 et 2). La paroi de récupération 30 présente en outre une surface supérieure 31 qui est agencée dans le prolongement de la surface supérieure 20 de la grille de filtrage 19 ou de la deuxième portion de rebord 23 de l'ouverture de récupération 18 et de la surface supérieure 20 de la grille de filtrage 19, et qui est inclinée par rapport à l'horizontale, du bas vers le haut, depuis la deuxième portion de rebord 24, de manière à favoriser l'écoulement du liquide de traitement récupéré sur la paroi de récupération 30 vers la grille de filtrage 19. La surface supérieure 31 de la paroi de récupération 30 est par exemple plane. La surface supérieure 31 de la paroi de récupération 30 peut être inclinée par rapport à l'horizontale d'un angle inférieur ou égal à 20°, notamment inférieur ou égal à 15°.

Le conduit d'air 13 est au moins en partie formé à l'intérieur de la partie structurelle 28 du panneau récupérateur 10.

Le conduit d'air 13 peut être alimenté en air au moyen d'un ventilateur centrifuge tangentiel lui-même monté sur la partie structurelle 28 du panneau récupérateur 10, notamment de manière à souffler de l'air dans la direction transversale Y vers le ou les orifices de soufflage 21.

Le cas échéant, le conduit d'air supplémentaire peut être au moins en partie formé à l'intérieur de la partie structurelle 28 du panneau récupérateur 10. Lorsque le conduit d'air supplémentaire est formé à l'intérieur de la partie structurelle 28 du panneau récupérateur 10, il peut alors être alimenté en air au moyen d'un ventilateur centrifuge tangentiel lui-même monté sur la partie structurelle 28 du panneau récupérateur 10, notamment de manière à souffler de l'air dans la direction transversale Y vers le ou les orifices de soufflage 21. Le conduit d'air supplémentaire peut aussi être rapporté sur la partie structurelle 28 du panneau récupérateur 10.

La partie structurelle 28 est par exemple formée par plusieurs pièces montées solidaires entre elles et définissant ensemble le conduit d'air 13. En variante, la partie structurelle 28 du panneau récupérateur 10 est formée par un caisson monobloc ou encore d'un seul tenant à l'intérieur duquel le conduit d'air 13 est formé.

Le ou les orifices de soufflage 21 peuvent être formés directement dans la partie structurelle 28 du panneau récupérateur 10.

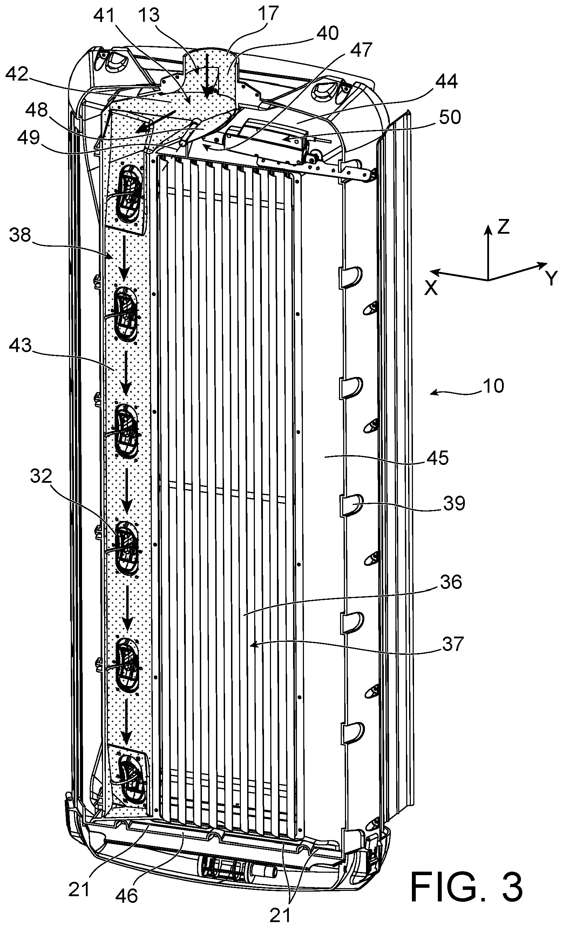

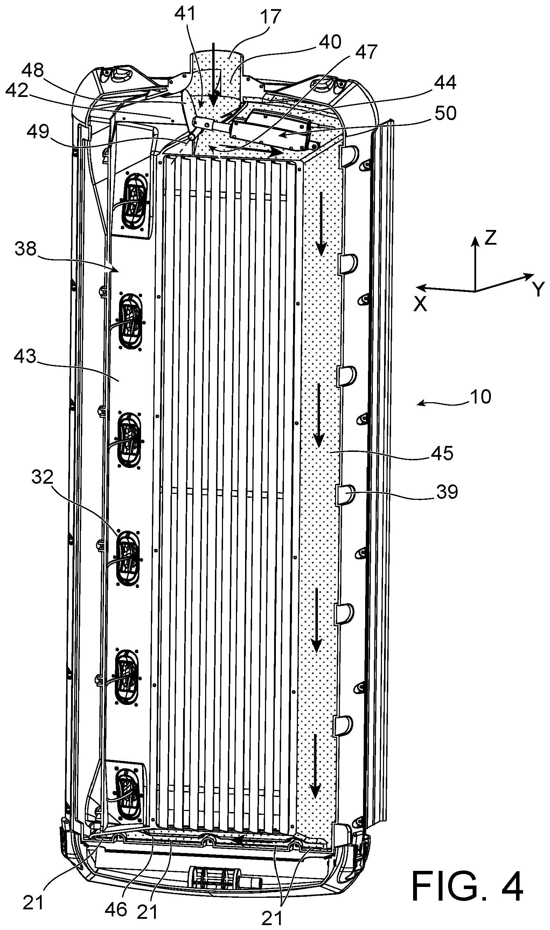

Une ou plusieurs ouvertures 32 peuvent être ménagées dans la partie structurelle 28 du panneau récupérateur 10, lesdites ouvertures 32 communiquant avec le conduit d'air 13 pour accueillir le ou les ensembles de pulvérisation 14, notamment le ou les diffuseurs d'air 16, qui sont alors rapportés sur la partie structurelle 28 (figures 3 et 4).

Le bac récupérateur 15 peut être rapporté sur la partie structurelle 28 du panneau récupérateur 10. Il peut en outre être amovible par rapport à la partie structurelle 28 du panneau récupérateur 10, afin de faciliter son nettoyage. En variante, le bac récupérateur 15 est formé d'un seul tenant avec la partie structurelle 28, avec l'une des pièces de ladite partie structurelle 28 ou avec le caisson.

Le panneau récupérateur 10 peut présenter deux faces 33, 34 opposées l'une par rapport à l'autre suivant la direction transversale Y, chacune de ces faces 33, 34 définissant un côté transversal du panneau récupérateur 10 (figure 1). L'une 33 de ces faces 33, 34, dite face de pulvérisation, est notamment destinée à être agencée en regard de la face de pulvérisation d'un autre panneau récupérateur 10. Le côté transversal du panneau récupérateur 10 défini par la face de de pulvérisation 33 sera appelé « côté de pulvérisation » dans la suite de la description.

Le ou les ensembles de pulvérisation 14, l'ouverture de récupération 18, la grille de filtrage 19, ainsi que le ou les orifices de soufflage 21 sont par exemple agencés du même côté transversal du panneau récupérateur 10, notamment du côté de pulvérisation.

Le panneau récupérateur 10 peut encore comprendre, notamment du côté de pulvérisation, des ailettes 35 qui sont globalement verticales et parallèles entre elles et qui sont réparties, régulièrement ou non, suivant la direction longitudinale X, de manière à capter des gouttelettes du liquide de traitement pulvérisé en surplus, et à les diriger vers le bac récupérateur 15 (figure 1).

Les ailettes 35 sont par exemple montées sur la partie structurelle 28 du panneau récupérateur 10.

Les ailettes 35 définissent par exemple entre elle des ouvertures 36 donnant accès à un volume intérieur 37 du panneau récupérateur 10, séparé du conduit d'air 13 (figure 3). Ces ouvertures 36 permettent de laisser passer l'air portant les gouttelettes du liquide de traitement pulvérisé en surplus, après que ces gouttelettes aient été séparées de l'air les portant au contact des ailettes 35. Le volume intérieur 37 est par exemple délimité suivant la direction transversale Y par les ailettes 35, notamment du côté de pulvérisation, et par une paroi latérale (non représentée) du panneau récupérateur 10, notamment du côté latéral opposé au côté de pulvérisation. Le volume intérieur 37 peut encore être délimité suivant les directions longitudinale X et verticale Z par le conduit d'air 13, entourant ainsi le volume intérieur 37.

Le conduit d'air 13 comprend par exemple une première conduite d'air 38 communiquant d'une part avec l'orifice d'entrée d'air 17 et d'autre part avec le ou les diffuseurs d'air 16, notamment via les ouvertures 32 de la partie structurelle 28 (figures 3 et 4). De cette manière, la première conduite d'air 38 alimente le ou les diffuseurs d'air 16 en air provenant de l'orifice d'entrée d'air 17. L'air circule donc, d'amont en aval, le long de la première conduite d'air 38, depuis l'orifice d'entrée d'air 17 vers le ou les ensembles de pulvérisation 14. La première conduite d'air 38 est formée dans la partie structurelle 28 du panneau récupérateur 10.

Le conduit d'air 13 comprend encore une deuxième conduite d'air 39 communiquant d'une part avec l'orifice d'entrée d'air 17, en parallèle de la première conduite d'air 38, et d'autre part avec le ou les orifices de soufflage 21 (figures 3 et 4). De cette manière, la deuxième conduite d'air 39 alimente le ou les orifices de soufflage 21 en air provenant de l'orifice d'entrée d'air 17. L'air circule donc, d'amont en aval, le long de la deuxième conduite d'air 39, depuis l'orifice d'entrée d'air 17 vers le ou les orifices de soufflage 21. La deuxième conduite d'air 39 peut être formée dans la partie structurelle 28 du panneau récupérateur 10. En variante (non représentée), la deuxième conduite d'air 39 est en partie formée dans la partie structurelle 28, notamment au niveau d'un tronçon commun 40, et en partie formée par une conduite souple rapportée sur la partie structurelle 28 rigide. Le ou les orifices de soufflage 21 peuvent alors être formés en sortie de la conduite souple.

Les première et deuxième conduites d'air 38, 39 comprennent par exemple un tronçon commun 40 s'étendant depuis l'orifice d'entrée d'air 17 jusqu'une bifurcation 41 au niveau de laquelle les première et deuxième conduites d'air 38, 39 se séparent l'une de l'autre en direction du ou des ensembles de pulvérisation 14 et du ou des orifices de soufflage 21, respectivement. Les première et deuxième conduites d'air 38, 39 peuvent se séparer globalement longitudinalement au niveau de la bifurcation 41, de manière à être décalées l'une de l'autre globalement longitudinalement, en aval de la bifurcation 41.

La première conduite d'air 38 comprend par exemple, en aval de la bifurcation 41, un premier tronçon 42 s'étendant globalement longitudinalement depuis la bifurcation 41, notamment vers l'avant, et un deuxième tronçon 43 qui prolonge le premier tronçon 42 et s'étend globalement verticalement vers le bas depuis le premier tronçon 42. Une pluralité d'ensembles de pulvérisation 14 peut en outre être répartie, de manière régulière ou non, globalement verticalement le long du deuxième tronçon 43 de la première conduite d'air 38.

La deuxième conduite d'air 39 comprend par exemple, en aval de la bifurcation 41, un premier tronçon 44 s'étendant globalement longitudinalement depuis la bifurcation 41, notamment vers l'arrière, un deuxième tronçon 45 qui prolonge le premier tronçon 44 et qui s'étend globalement verticalement vers le bas depuis le premier tronçon 44, et un troisième tronçon 46 qui prolonge le deuxième tronçon 45 et qui s'étend globalement longitudinalement, notamment vers l'avant, depuis le deuxième tronçon 45. Les premier et troisième tronçons 44, 46 sont donc verticalement séparés l'un de l'autre par le deuxième tronçon 45. Les orifices de soufflage 21 peuvent en outre être répartis, de manière régulière ou non, globalement longitudinalement le long du troisième tronçon 46 de la deuxième conduite d'air 39.

Les premier et deuxième tronçons 42, 43 de la première conduite d'air 38 et les premier, deuxième et troisième tronçons 44, 45, 46 de la deuxième conduite d'air 39 définissent par exemple ensemble un cadre délimitant longitudinalement et verticalement le volume intérieur 37 du panneau récupérateur 10.

Le panneau récupérateur 10 peut aussi comprendre un obturateur 47 mobile par rapport à la partie structurelle 28 du panneau récupérateur 10 et agencé à l'intérieur du conduit d'air 13 (figures 3 à 5).

L'obturateur 47 est en outre conçu pour sélectivement occuper une position de pulvérisation dans laquelle l'obturateur 47 libère la première conduite d'air 38 et obture la deuxième conduite d'air 39, en amont du ou des orifices de soufflage 21, et une position de soufflage des déchets végétaux dans laquelle l'obturateur 47 obture la première conduite d'air 38, en amont du ou des ensembles de pulvérisation 14, et libère la deuxième conduite d'air 39.

De cette manière, dans la position de pulvérisation, l'obturateur 47 autorise l'air de circuler depuis l'orifice d'entrée d'air 17 vers le ou les ensembles de pulvérisation 14 via la première conduite d'air 38 et empêche l'air de circuler depuis l'orifice d'entrée d'air 17 vers le ou les orifices de soufflage 21 via la deuxième conduite d'air 39. Au contraire, dans la position de soufflage des déchets végétaux, l'obturateur 47 autorise l'air de circuler depuis l'orifice d'entrée d'air 17 vers le ou les orifices de soufflage 21 via la deuxième conduite d'air 39 et empêche l'air de circuler depuis l'orifice d'entrée d'air 17 vers le ou les ensembles de pulvérisation 14 via la première conduite d'air 38.

Ainsi, le conduit d'air 13 ne peut pas alimenter en même temps en air le ou les diffuseurs d'air 16 et le ou les orifices de soufflage 21. Cela permet d'éviter que le jet d'air produit par le ou les orifices de soufflage 21, qui balaie la surface supérieure 20 de la grille de filtrage 19, empêche le liquide de traitement pulvérisé en surplus de traverser la grille de filtrage 19 et donc d'atteindre le bac récupérateur 15.

L'obturateur 47 comprend par exemple un volet 48 monté pivotant sur la partie structurelle 28 du panneau récupérateur 10, à l'intérieur du conduit d'air 13, autour d'un axe de pivotement 49, entre la position de pulvérisation et la position de soufflage des végétaux (figures 3 à 5) L'axe de pivotement 49 peut être orienté globalement transversalement.

Le volet 48 peut en outre être monté pivotant à l'intérieur du conduit d'air 13 au niveau de la bifurcation 41.

En variante (non représentée), l'obturateur 47 comprend un tiroir monté coulissant par rapport à la partie structurelle 28 du panneau récupérateur 28 suivant un axe de coulissement. Le tiroir comprend en outre une gorge s'étendant autour de l'axe de coulissement et conçue pour faire communiquer sélectivement l'orifice d'entrée d'air 17 et la première conduite d'air 38, lorsque l'obturateur 37 occupe la position de pulvérisation, et l'orifice d'entrée d'air 17 et la deuxième conduite d'air 39, lorsque l'obturateur 37 occupe la position de soufflage des déchets végétaux.

L'obturateur 47 fonctionne ainsi comme un distributeur à tiroir pour sélectivement alimenter en air la première et la deuxième conduite d'air 37, 38.

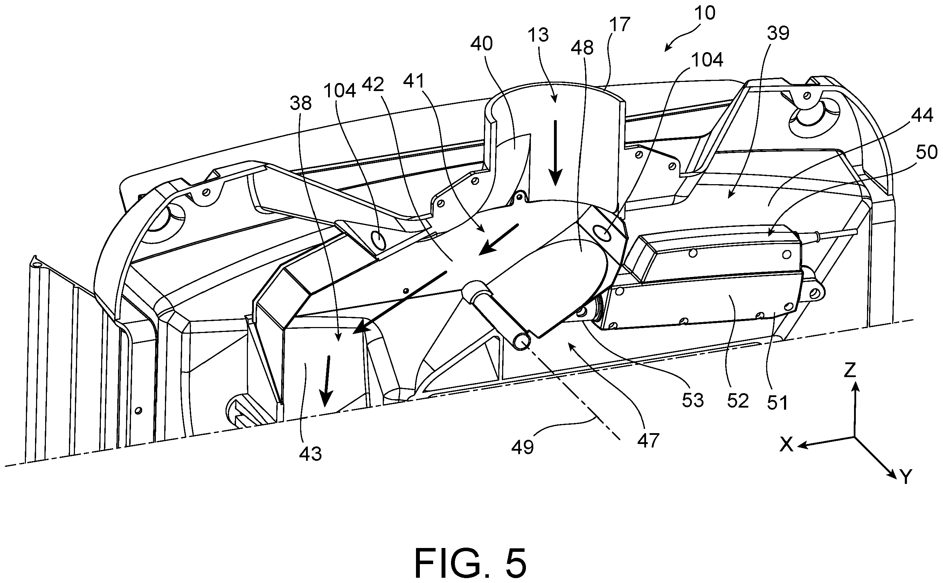

Le panneau récupérateur 10 comprend par exemple aussi un actionneur 50 conçu pour entraîner l'obturateur 47 en déplacement, notamment le volet 48 en pivotement, par rapport à la partie structurelle 28 du panneau récupérateur 10 entre la position de pulvérisation et la position de soufflage des déchets végétaux (figure 5).

L'actionneur 50 comprend par exemple un vérin 51 comprenant lui-même un cylindre 52 à l'intérieur duquel une tige 53 est conçue pour coulisser entre une position rentrée et une position sortie dans laquelle une extrémité de la tige 53 est plus éloignée du cylindre qu'en position rentrée. L'un parmi le cylindre 52 et l'extrémité de la tige 53 est monté sur la partie structurelle 28 du panneau récupérateur 10, tandis que l'autre parmi le cylindre 52 et l'extrémité de la tige 53 est monté sur l'obturateur 47, notamment sur le volet 48.

Lorsque le vérin 51 occupe l'une parmi la position rentrée et la position sortie, l'obturateur 47 occupe la position de pulvérisation. Lorsque le vérin occupe l'autre parmi la position rentrée et la position sortie, l'obturateur 47 occupe la position de soufflage des déchets végétaux.

En variante (non représentée), l'actionneur 50 comprend un moteur électrique couplé à un motoréducteur, lui-même couplé à un pignon porté par l'axe de pivotement 49 du volet 48 ou à une vis sans fin ou encore une crémaillère portée par ou formée sur le tiroir.

Encore en variante (non représentée), l'actionneur 50 comprend un actionneur électromagnétique à aimant conçu pour entraîner l'obturateur 47 en déplacement, notamment le volet 48 en pivotement, par rapport à la partie structurelle 28 du panneau récupérateur 10 depuis l'une des positions de pulvérisation et de soufflage des déchets végétaux vers l'autre des positons de pulvérisation et de soufflage des déchets végétaux, lorsqu'il est alimenté en énergie électrique par une source d'énergie électrique. Un organe de rappel élastique peut en outre être conçu pour rappeler l'obturateur 47 en déplacement depuis l'autre des positons de pulvérisation et de soufflage des déchets végétaux vers l'une des positions de pulvérisation et de soufflage des déchets végétaux. L'obturateur 47 se déplace ainsi vers l'une des positions de pulvérisation et de soufflage des déchets végétaux, lorsque l'actionneur électromagnétique à aimant n'est pas alimenté en énergie électrique. Pour cela, l'organe de rappel élastique peut notamment être monté entre l'obturateur 47 et la partie structurelle 28 du panneau récupérateur 10. L'organe de rappel élastique est par exemple formé par un ressort.

L'actionneur 50, notamment le vérin 51, peut être monté à l'intérieur de la deuxième conduite d'air 39, de manière à limiter l'encombrement du panneau récupérateur 10 mais aussi pour protéger l'actionneur 50. Le cas échéant, l'obturateur 47 occupe la position de soufflage des déchets végétaux, lorsque le vérin 51 occupe la position sortie, et la position de pulvérisation, lorsque le vérin 51 occupe la position rentrée.

L'actionneur 50 est par exemple entraîné électriquement, le vérin 51 étant notamment électrique En variante, l'actionneur 50 est entraîné de manière pneumatique ou hydraulique, le vérin 51 étant notamment pneumatique ou hydraulique.

Le ou chaque diffuseur d'air 16 comprend par exemple un corps 54 par l'intermédiaire duquel le diffuseur d'air 16 est monté sur la partie structurelle 28 du panneau récupérateur 10, notamment via l'ouverture 32 de ladite partie structurelle 28 (figure 2). Le ou chaque diffuseur d'air 16 communique en outre avec le conduit d'air 13 au moyen d'une ouverture de diffusion d'air 55 qui est ménagée dans le corps 54.

Le ou chaque ensemble de pulvérisation 14 comprend par exemple aussi une buse 56 montée sur le corps 54 du diffuseur d'air 16 et alimentée en liquide de traitement sous pression par un circuit d'alimentation (non représenté) (figure 2). La buse 56 et l'ouverture de diffusion d'air 55 sont juxtaposées. La buse 56 est en outre conçue pour pulvériser du liquide de traitement sous pression, le flux d'air produit par le diffuseur d'air 16 portant le liquide de traitement sous pression ainsi pulvérisé vers les végétaux à traiter.

En variante (non représentée), le ou chaque ensemble de pulvérisation 14 comprend un éclateur monté sur le corps 54 du diffuseur d'air 16, de manière à être agencé en travers de l'ouverture de diffusion d'air 55. L'éclateur comprend en outre un orifice d'entrée par l'intermédiaire duquel l'éclateur est alimenté en liquide de traitement par un circuit d'alimentation, un orifice de sortie de liquide de traitement, ainsi qu'une ou deux ailettes conçues pour disperser, dans le flux d'air produit par le diffuseur d'air 16, le liquide de traitement sortant de l'orifice de sortie.

Le bac récupérateur 15 comprend par exemple un fond (non référencé) fermant le bac récupérateur 15 vers le bas, l'ouverture de récupération 18 étant opposée au fond, globalement suivant la direction verticale Z, ainsi qu'au moins une paroi latérale (non référencée) s'étendant depuis le fond vers le haut vers l'ouverture de récupération 18. La ou les parois latérales définissent avec le fond et la grille de filtrage 19 un volume intérieur du bac récupérateur 15. La surface supérieure 20 de la grille de filtrage 19 et le ou les orifices de soufflage 21 sont ainsi situés à l'extérieur du bac récupérateur 15, tandis qu'une surface inférieure de la grille de filtrage 19, opposée à la surface supérieure 20, délimite le volume intérieur du bac récupérateur 15.

Un ou plusieurs orifices d'évacuation (non représentés) peuvent en outre être prévus dans le fond et/ou la ou les parois latérales du bac récupérateur 15 pour l'aspiration du liquide de traitement récupéré dans le bac récupérateur 15 et/ou pour la vidange du bac récupérateur 15.

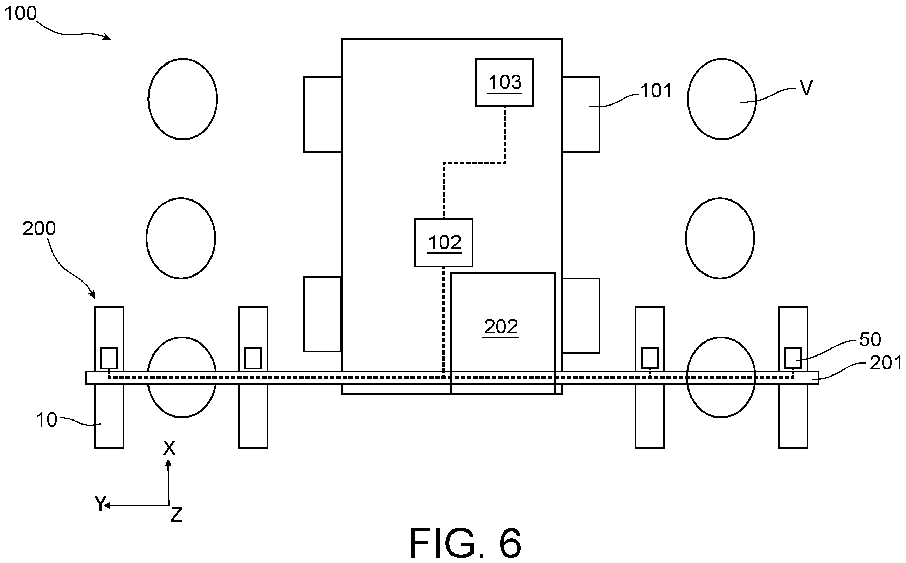

La figure 6 montre un engin agricole 100, tel qu'un tracteur, comprenant un système de pulvérisation agricole 200 pourvu d'au moins un panneau récupérateur 10 tel que précédemment décrit.

Le système de pulvérisation agricole 200 est en contact avec le sol, notamment via des roues 101, notamment de l'engin agricole 100, par l'intermédiaire desquelles le système de pulvérisation agricole 200 avance dans un champ de végétaux V à traiter suivant la direction longitudinal X.

Le système de pulvérisation agricole 200 est destiné à être porté par l'engin agricole 100. En variante, le système de pulvérisation agricole 200 est par exemple destiné à être tracté par l'engin agricole 100. Encore en variante, le système de pulvérisation agricole 200 est automoteur et forme donc l'engin agricole 100.

Le système de pulvérisation agricole 200 comprend par exemple une rampe de pulvérisation 201 qui est orientée globalement transversalement et à laquelle au moins un panneau récupérateur 10 est suspendu. Les panneaux récupérateurs 10 sont par exemple agencés par paire, des végétaux V à traiter étant transversalement interposés entre chacune desdites paires. Les faces de pulvérisation 33 des panneaux récupérateurs 10 de chaque paire sont notamment agencées en regard l'une de l'autre.

Le système de pulvérisation agricole 200 peut encore comprendre un circuit pneumatique (non représenté) raccordé à l'orifice d'entrée d'air 17 et comprenant une soufflante, de manière à alimenter en air, notamment en air sous pression, le conduit d'air 13. La soufflante alimentant le conduit d'air 13 peut aussi être directement montée au niveau de l'orifice d'entrée d'air 17 du conduit d'air 13, de sorte qu'il n'est pas nécessaire qu'un circuit pneumatique alimente le conduit d'air 13.

En variante (non représentée), le système de pulvérisation agricole 200 comprend deux circuits pneumatiques distincts, l'un raccordé à l'orifice d'entrée d'air 17 et au conduit d'air 13, l'autre au conduit d'air supplémentaire. Les circuits pneumatiques comprennent chacun une soufflante pour alimenter en air le conduit d'air 13 et le conduit d'air supplémentaire. La soufflante alimentant le conduit d'air supplémentaire peut aussi être directement montée dans le conduit d'air supplémentaire, de sorte qu'il n'est pas nécessaire qu'un circuit pneumatique alimente le conduit d'air supplémentaire. La soufflante alimentant le conduit d'air 13 peut elle-même être directement montée au niveau de l'orifice d'entrée d'air 17 du conduit d'air 13, de sorte qu'il n'est pas nécessaire qu'un circuit pneumatique alimente le conduit d'air 13.

Le système de pulvérisation agricole 200 peut aussi comprendre une cuve 202 destinée à contenir du liquide de traitement, ainsi qu'un circuit d'alimentation (non représenté) en liquide de traitement raccordé d'une part à la cuve 202 et d'autre part au circuit d'alimentation du panneau récupérateur 10 et comprenant une pompe, de manière à alimenter le ou les ensembles de pulvérisation 14 en liquide de traitement.

L'engin agricole 100 peut encore comprendre une unité de commande 102 électronique conçue pour piloter l'actionneur 50, notamment le vérin 51. L'unité de commande 102 peut piloter l'actionneur 50 directement, notamment lorsque l'actionneur 50 est entraîné électriquement, ou indirectement par l'intermédiaire d'un circuit pneumatique ou hydraulique ou encore de la source d'énergie électrique qui est alors piloté par l'unité de commande 102 et qui entraîne l'actionneur 50.

L'engin agricole 100 peut encore comprendre une interface utilisateur 103 reliée à l'unité de commande 102 et par l'intermédiaire de laquelle l'agriculteur communique avec l'unité de commande 102, l'unité de commande 102 étant conçue pour commander l'actionneur 50 de déplacer l'obturateur 47, notamment de pivoter le volet 48, de la position de pulvérisation à la position de soufflage des déchets végétaux et de la position de soufflage des déchets végétaux à la position de pulvérisation, lorsque l'unité de commande 102 reçoit une commande envoyée par l'agriculteur via l'interface utilisateur 103.

L'unité de commande 102 peut encore être conçue pour commander un arrêt de la pulvérisation, notamment de l'alimentation des ensembles de pulvérisation 14 en liquide de traitement et en air, et le cas échéant un déplacement de la rampe de pulvérisation 201 et/ou des panneaux récupérateurs 10 par rapport à un châssis de l'engin agricole 100 vers une position repliée, ainsi que pour commander l'actionneur 50 de déplacer l'obturateur 47, notamment de pivoter le volet 48, de la position de pulvérisation à la position de soufflage des déchets végétaux, lorsque l'unité de commande 102 reçoit une commande envoyée par l'agriculteur via l'interface utilisateur 103. L'obturateur 47 est ainsi automatiquement déplacé vers la position de soufflage des déchets végétaux, lorsque l'agriculteur arrête la pulvérisation, notamment pour faire demi-tour en bout de rangs de végétaux V afin de changer de rangs de végétaux V à traiter. Autrement dit, avec une seule commande, l'agriculteur commande l'arrêt de la pulvérisation et le déplacement de l'obturateur 47 jusqu'à la position de soufflage des déchets végétaux.

De même, l'unité de commande 102 peut être conçue pour commander un redémarrage de la pulvérisation, notamment de l'alimentation des ensembles de pulvérisation 14 en liquide de traitement et en air, et le cas échéant un déplacement de la rampe de pulvérisation 201 et/ou des panneaux récupérateurs 10 par rapport à un châssis de l'engin agricole 100 vers une position déployée, ainsi que pour commander l'actionneur 50 de déplacer l'obturateur 47, notamment de pivoter le volet 48, de la position de soufflage des déchets végétaux à la position de pulvérisation, lorsque l'unité de commande 102 reçoit une commande envoyée par l'agriculteur via l'interface utilisateur 103. L'obturateur 47 est ainsi automatiquement déplacé vers la position de pulvérisation, lorsque l'agriculteur redémarre la pulvérisation, notamment après le demi-tour pour changer de rangs de végétaux V à traiter. Autrement dit, avec une seule commande, l'agriculteur commande le redémarrage de la pulvérisation et le déplacement de l'obturateur 47 jusqu'à la position de pulvérisation.

Bien sûr, l'agriculteur peut aussi commander, via l'interface utilisateur 103 et l'unité de commande 102, le déplacement de l'obturateur 47 indépendamment de l'arrêt ou du démarrage de la pulvérisation. C'est par exemple le cas, lorsqu'il est nécessaire d'évacuer les déchets végétaux retenus sur la grille de filtrage 19 en cours de pulvérisation d'un rang de végétaux V à traiter, c'est-à-dire avant le prochain demi-tour pour changer de rangs de végétaux V à traiter.

L'unité de commande 102 est par exemple aussi conçue pour commander l'actionneur 50 de déplacer l'obturateur 47 de la position de soufflage des déchets végétaux à la position de pulvérisation, lorsqu'une durée de soufflage prédéterminée s'est écoulée depuis que l'agriculteur a envoyé, via l'interface utilisateur 103, une commande à l'unité de commande 102 pour que l'actionneur 50 déplace l'obturateur 47 de la position de pulvérisation à la position de soufflage des déchets végétaux ou que l'obturateur 47 occupe la position de soufflage des déchets végétaux. L'unité de commande 102 opère ainsi une temporisation. Pour cela, l'engin agricole 100 comprend par exemple un compteur de temps, tel qu'une horloge, relié à l'unité de commande 102.

L'unité de commande 102 peut encore être conçue pour :
- détecter une anomalie de fonctionnement de l'obturateur 47 et/ou de l'actionneur 50 du ou d'un des panneaux récupérateur 10, au moyen d'un premier dispositif de détection 104 monté sur le ou sur chacun des panneaux récupérateur 10, lorsque l'obturateur 47 dudit panneau récupérateur 10 n'occupe ni la position de pulvérisation, ni la position de soufflage des déchets végétaux, les première et deuxième conduites d'air 38, 39 dudit panneau récupérateur 10 étant toutes deux alimentées en air, ou que l'obturateur 47 dudit panneau récupérateur 10 occupe l'une des positions de pulvérisation et de soufflage des déchets végétaux, alors que l'unité de commande 102 a commandé l'actionneur 50 de déplacer l'obturateur 47 de l'une des positions de pulvérisation et de soufflage des déchets végétaux à l'autre des positions de pulvérisation et de soufflage des déchets végétaux, et
- envoyer une alerte à l'agriculteur via l'interface utilisateur 103, lorsqu'une anomalie de fonctionnement de l'obturateur 47 et/ou de l'actionneur 50 dudit panneau récupérateur 10 est ainsi détectée.

Le ou chaque premier dispositif de détection 104 est par exemple conçu pour détecter une position de l'obturateur 47 du panneau récupérateur 10 sur lequel il est monté et pour envoyer cette position à l'unité de commande 102, l'unité de commande 102 étant conçue pour envoyer une alerte à l'agriculteur via l'interface utilisateur 103, lorsque la position de l'obturateur 47 détectée par le premier dispositif de détection 104 n'est ni la position de pulvérisation, ni la position de soufflage des déchets végétaux ou que le premier dispositif de détection 104 détecte que l'obturateur 47 occupe l'une des positions de pulvérisation et de soufflage des déchets végétaux, alors que l'unité de commande 102 a commandé l'actionneur 50 de déplacer l'obturateur 47 de l'une des positions de pulvérisation et de soufflage des déchets végétaux à l'autre des positions de pulvérisation et de soufflage des déchets végétaux.

Le ou chaque premier dispositif de détection 104 est par exemple conçu pour envoyer un signal de détection à l'unité de commande 102, lorsque l'obturateur 47 du panneau récupérateur 10 sur lequel il est monté occupe la position de pulvérisation ou la position de soufflage des déchets végétaux. Ainsi, lorsqu'un premier dispositif de détection 104 n'envoie pas de signal de détection, c'est que l'obturateur 47 n'occupe ni la position de pulvérisation, ni la position de soufflage des déchets végétaux, et donc que les première et deuxième conduites d'air 38, 39 sont toutes deux alimentées en air. L'unité de commande 102 est alors conçue pour envoyer une alerte à l'agriculteur via l'interface utilisateur 103, lorsque le ou l'un des premiers dispositifs de détection 104 n'envoie aucun signal de détection ou envoie un signal de détection en contradiction avec la commande de l'actionneur 50, l'obturateur 47 occupant l'une des positions de pulvérisation et de soufflage des déchets végétaux, alors que l'unité de commande 102 a commandé l'actionneur 50 de déplacer l'obturateur 47 de l'une des positions de pulvérisation et de soufflage des déchets végétaux à l'autre des positions de pulvérisation et de soufflage des déchets végétaux.

Le ou chacun des premiers dispositifs de détection 104 comprend par exemple une paire de capteurs inductifs, l'un des capteurs inductifs étant conçu pour envoyer le signal de détection à l'unité de commande 102, lorsque l'obturateur 47 du panneau récupérateur 10 sur lequel le premier dispositif de détection 104 est monté, occupe la position de pulvérisation, l'autre des capteurs inductifs étant conçu pour envoyer le signal de détection à l'unité de commande 102, lorsque l'obturateur 47 occupe la position de soufflage des déchets végétaux. Pour cela, l'obturateur 47 du ou de chaque panneau récupérateur 10 présente au moins une surface ou portion métallique agencée en regard de l'un des capteurs inductifs, lorsque l'obturateur 47 occupe la position de pulvérisation, et de l'autre des capteurs inductifs, lorsque l'obturateur 47 occupe la position de soufflage des déchets végétaux.

En variante, le ou chacun des premiers dispositifs de détection 104 comprend une paire d'interrupteurs, l'obturateur 47 du panneau récupérateur 10 sur lequel le premier dispositif 104 de détection est monté, étant conçu pour fermer l'un des interrupteurs, notamment par l'intermédiaire d'un bouton poussoir, lorsque l'obturateur 47 occupe la position de pulvérisation, et l'autre des interrupteurs, notamment par l'intermédiaire d'un autre bouton poussoir, lorsque l'obturateur 47 occupe la position de soufflage des déchets végétaux. Chacun des interrupteurs est en outre conçus pour envoyer le signal de détection à l'unité de commande 102, lorsqu'il est fermé.

Encore en variante (non représentée), le premier dispositif de détection 104 comprend un potentiomètre solidaire en pivotement avec le volet 48 de l'obturateur 47 du panneau récupérateur 10 sur lequel il est monté. Le potentiomètre est en outre conçu pour envoyer une valeur de signal à l'unité de commande 102, la valeur de signal étant égale à une première valeur de signal, lorsque l'obturateur 47 occupe la position de pulvérisation, et à une deuxième valeur de signal différente de la première valeur de signal, lorsque l'obturateur 47 occupe la position de soufflage des déchets végétaux. L'unité de commande 102 est alors conçue pour comparer la valeur de signal reçue du potentiomètre aux première et deuxième valeurs de signal et pour envoyer une alerte à l'agriculteur via l'interface utilisateur 103, lorsque la valeur de signal reçue est différentes des première et deuxième valeurs de signal ou qu'il y a une contradiction entre la valeur de signal reçue et la commande de l'actionneur 50, l'obturateur 47 occupant l'une des positions de pulvérisation et de soufflage des déchets végétaux, alors que l'unité de commande 102 a commandé l'actionneur 50 de déplacer l'obturateur 47 de l'une des positions de pulvérisation et de soufflage des déchets végétaux à l'autre des positions de pulvérisation et de soufflage des déchets végétaux.

Encore en variante (non représentée), le ou chaque premier dispositif de détection 104 comprend une paire de capteurs de pression, l'un des capteurs de pression étant agencé dans la première conduite d'air 38 du panneau récupérateur 10 sur lequel il est monté, l'autre des capteurs de pression étant agencé dans la deuxième conduite d'air 39 dudit panneau récupérateur 10. Les capteurs de pression sont en outre respectivement conçus pour mesurer la pression dans les première et deuxième conduites d'air 38, 39 et pour envoyer ces pressions mesurées à l'unité de commande 102. L'unité de commande 102 est alors conçue pour comparer chacune de ces pressions mesurées à une pression seuil prédéterminée et pour envoyer une alerte à l'agriculteur via l'interface utilisateur 103, lorsque les deux pressions sont supérieures à la pression seuil, les première et deuxième conduites d'air 38, 39 étant toutes deux alimentées en air, ou qu'il y a une contradiction entre celle des deux pressions mesurées qui est supérieure à la pression seuil et la commande de l'actionneur 50, la pression mesurée dans l'une des première et deuxième conduites d'air 38, 39 étant supérieure à la pression seuil, alors que l'unité de commande 102 a commandé l'actionneur 50 de déplacer l'obturateur 47 de manière à alimenter en air l'autre des première et deuxième conduites d'air 38, 39.

En variante (non représentée), un témoin visuel est porté par l'obturateur 47 du ou de chaque panneau récupérateur 10, à l'extérieur du conduit d'air 13. Le témoin visuel est par exemple solidaire en pivotement avec le volet 48 de l'obturateur 47 et fait saillie à l'extérieur du conduit d'air 13. Ce témoin visuel permet à l'agriculteur de connaître la position de l'obturateur 47 et ainsi d'identifier des éventuelles anomalies de fonctionnement de l'obturateur 47 et/ou de l'actionneur 50, notamment lorsque le témoin visuel indique que l'obturateur 47 occupe une position intermédiaire entre la position de pulvérisation et la position de soufflage des déchets végétaux ou que le témoin visuel indique que l'obturateur 47 occupe l'une des positions de pulvérisation et de soufflage des déchets végétaux alors que l'agriculteur a envoyé, via l'interface utilisateur 103, une commande à l'unité de commande 102 pour qu'elle commande elle-même l'actionneur 50 de déplacer l'obturateur 47 de l'une des positions de pulvérisation et de soufflage des déchets végétaux à l'autre des positions de pulvérisation et de soufflage des déchets végétaux.

L'engin agricole 100 comprend par exemple aussi un deuxième dispositif de détection 105 des déchets végétaux monté sur le ou sur l'un au moins des panneaux récupérateurs 10. Le deuxième dispositif de détection 105 des déchets végétaux est conçu pour envoyer un signal de détection à l'unité de commande 102, lorsqu'il détecte des déchets végétaux retenus sur la surface supérieure 20 de la grille de filtrage 19 du panneau récupérateur 10 sur lequel il est monté, à une hauteur, prise par rapport à la surface supérieure 20 de la grille de filtrage 19, supérieure ou égale à une hauteur seuil prédéterminée. Il est entendu par « hauteur », une dimension suivant la direction verticale Z.

L'unité de commande 102 est en outre conçue pour envoyer une alerte à l'agriculteur via l'interface utilisateur 103, lorsque l'unité de commande 102 reçoit un signal de détection du deuxième dispositif de détection 105 des déchets végétaux. L'unité de commande 102 est par exemple conçue pour envoyer l'alerte à l'agriculteur via l'interface utilisateur 103, lorsque l'unité de commande 102 reçoit le signal de détection du deuxième dispositif de détection 105 des déchets végétaux pendant une durée prédéterminée. Pour cela, l'engin agricole 100 comprend par exemple un compteur de temps, tel qu'une horloge, relié à l'unité de commande 102. L'agriculteur peut alors envoyer, via l'interface utilisateur 103, une commande à l'unité de commande 102 pour qu'elle commande elle-même l'actionneur 50 de déplacer l'obturateur 47, notamment de pivoter le volet 48, de la position de pulvérisation à la position de soufflage des déchets végétaux. Le ou chaque deuxième dispositif de détection 105 des déchets végétaux peut être un détecteur infrarouge monté sur le panneau récupérateur 10, au-dessus de la grille de filtrage 19.

Le panneau récupérateur 10, le système de pulvérisation agricole 200 et l'engin agricole 100 décrits ci-dessus sont particulièrement avantageux car ils permettent de produire un jet d'air soufflant sur les déchets végétaux récupérés sur la grille de filtrage 19, de manière à évacuer ces déchets végétaux avec peu ou même sans intervention manuelle de l'agriculteur au niveau de la grille de filtrage 19.

## Revendications

1. Panneau récupérateur (10) pour système de pulvérisation agricole (200), le panneau récupérateur (10) s'étendant globalement suivant une direction verticale (Z), du bas vers le haut, entre une base (11) et un sommet (12), et comprenant :
- un conduit d'air (13) comprend un orifice d'entrée d'air (17) par l'intermédiaire duquel le conduit d'air (13) est alimenté en air,
- un bac récupérateur (15) formant la base (11) du panneau récupérateur (10) et comprenant une ouverture de récupération (18) par l'intermédiaire de laquelle le bac récupérateur (15) est destiné à récupérer du liquide de traitement pulvérisé en surplus sur les végétaux à traiter, l'ouverture de récupération (18) s'étendant autour d'un axe globalement vertical et étant orientée vers le haut, l'ouverture de récupération (18) étant en outre occupée, au moins en partie, par une grille de filtrage (19) conçue pour autoriser la circulation de liquide de traitement pulvérisé en surplus vers le bac récupérateur (15) et pour retenir des déchets végétaux sur une surface supérieure (20) de la grille de filtrage (19), qui est verticalement opposée au bac récupérateur (15),
le panneau récupérateur (10) étant **caractérisé en ce qu'**il comprend encore au moins un orifice de soufflage (21) communiquant avec le conduit d'air (13) ou un conduit d'air supplémentaire et conçu pour produire un jet d'air balayant la surface supérieure (20) de la grille de filtrage (19), de manière à souffler sur les déchets végétaux retenus sur la surface supérieure (20) de la grille de filtrage (19).

2. Panneau récupérateur (10) selon la revendication 1, dans lequel la surface supérieure (20) de la grille de filtrage (19) est située en dessous du ou des orifices de soufflage (21) et affleure le ou les orifices de soufflage (21).

3. Panneau récupérateur (10) selon la revendication 1 ou la revendication 2, dans lequel l'ouverture de récupération (18) est délimitée par un rebord (22) comprenant une première et une deuxième portions de rebord (23, 24) s'étendant globalement suivant une direction longitudinale (X) horizontale, en parallèle l'une de l'autre, la première portion de rebord (23) étant agencée en regard du ou des orifices de soufflage (21), la deuxième portion de rebord (24) étant libre, dans lequel la grille de filtrage (19) occupe l'ouverture de récupération (18) suivant une direction transversale (Y) horizontale, perpendiculaire à la direction longitudinale (X), depuis la première portion de rebord (23) jusqu'à la deuxième portion de rebord (24), et dans lequel le ou les orifices de soufflage (21) sont conçus pour produire un jet d'air orienté globalement transversalement, balayant la surface supérieure (20) de la grille de filtrage (19), de manière à souffler sur les déchets végétaux retenus par la surface supérieure (20) de la grille de filtrage (19), depuis la première portion de rebord (23) vers la deuxième portion de rebord (24) libre de l'ouverture de récupération (18), et ainsi évacuer les déchets végétaux.

4. Panneau récupérateur (10) selon la revendication 3, dans lequel la grille de filtrage (19) comprend un premier et un deuxième bords (25, 26) s'étendant globalement longitudinalement, en parallèle l'un de l'autre, et reliés transversalement l'un à l'autre par la surface supérieure (20), le premier bord (25) de la grille de filtrage (19) étant agencé en regard de la première portion de rebord (23), le deuxième bord (26) de la grille de filtrage (19) étant agencé en regard de la deuxième portion de rebord (24), et dans lequel les orifices de soufflage (21) sont répartis le long du premier bord (25) de la grille de filtrage (19).

5. Panneau récupérateur (10) selon la revendication 3 ou la revendication 4, dans lequel le ou chaque orifice de soufflage (21) s'étend autour d'un axe de soufflage (27) orienté globalement transversalement.

6. Panneau récupérateur (10) selon l'une des revendications 1 à 5, comprenant au moins un ensemble de pulvérisation (14) conçu pour pulvériser un liquide de traitement sur des végétaux à traiter, le ou chaque ensemble de pulvérisation (14) comprend un diffuseur d'air (16) communiquant avec le conduit d'air (13) et conçu pour produire un flux d'air portant ou soufflant le liquide de traitement sur les végétaux à traiter.

7. Panneau récupérateur (10) selon la revendication 6, dans lequel le conduit d'air (13) est au moins en partie formé à l'intérieur d'une partie structurelle (28) du panneau récupérateur (10), dans lequel le conduit d'air (13) comprend une première conduite d'air (38) communiquant d'une part avec l'orifice d'entrée d'air (17) et d'autre part avec le ou les diffuseurs d'air (16), et une deuxième conduite d'air (39) communiquant d'une part avec l'orifice d'entrée d'air (17), en parallèle de la première conduite d'air (38), et d'autre part avec le ou les orifices de soufflage (21), le panneau récupérateur (10) comprenant en outre un obturateur (47) qui est mobile par rapport à la partie structurelle (28) et qui est agencé à l'intérieur du conduit d'air (13), l'obturateur (47) étant en outre conçu pour sélectivement occuper une position de pulvérisation dans laquelle l'obturateur (47) libère la première conduite d'air (38) et obture la deuxième conduite d'air (39), en amont du ou des orifices de soufflage (21), et une position de soufflage des déchets végétaux dans laquelle l'obturateur (47) obture la première conduite d'air (38), en amont du ou des ensembles de pulvérisation (14), et libère la deuxième conduite d'air (39).

8. Panneau récupérateur (10) selon la revendication 7, dans lequel l'obturateur (47) comprend un volet (48) monté pivotant sur la partie structurelle (28), à l'intérieur du conduit d'air (13), autour d'un axe de pivotement (49), entre la position de pulvérisation et la position de soufflage des végétaux.

9. Panneau récupérateur (10) selon la revendication 7 ou la revendication 8, comprenant un actionneur (50) conçu pour entraîner l'obturateur (47) en déplacement par rapport à la partie structurelle (28) entre la position de pulvérisation et la position de soufflage des déchets végétaux.

10. Système de pulvérisation agricole (200) pour engin agricole (100), comprenant au moins un panneau récupérateur (10) selon l'une des revendications 1 à 9.

11. Engin agricole (100) comprenant un système de pulvérisation agricole (200) selon la revendication 10.

12. Engin agricole (100) selon la revendication 11, dans lequel le système de pulvérisation agricole (200) comprend au moins un panneau récupérateur (10) selon la revendication 9, l'engin agricole (100) comprenant une unité de commande (102) conçue pour commander l'actionneur (50) de déplacer l'obturateur (47) de la position de pulvérisation à la position de soufflage des déchets végétaux et/ou de la position de soufflage des déchets végétaux à la position de pulvérisation.

13. Engin agricole (100) selon la revendication 12, dans lequel l'unité de commande (102) est conçue pour commander l'actionneur (50) de déplacer l'obturateur (47) de la position de pulvérisation à la position de soufflage des déchets végétaux et/ou de la position de soufflage des déchets végétaux à la position de pulvérisation, lorsque l'unité de commande (102) reçoit une commande envoyée par un opérateur au moyen d'une interface utilisateur (103) reliée à ladite unité de commande (102).

14. Engin agricole (100) selon la revendication 13, dans lequel l'unité de commande (102) est conçue pour :
- détecter une anomalie de fonctionnement de l'obturateur (47) et/ou de l'actionneur (50) du ou d'un des panneaux récupérateur (10), au moyen d'un premier dispositif de détection (104) monté sur le ou sur chacun des panneaux récupérateur (10), lorsque l'obturateur (47) dudit panneau récupérateur (10) n'occupe ni la position de pulvérisation, ni la position de soufflage des déchets végétaux ou que l'obturateur (47) dudit panneau récupérateur (10) occupe l'une des positions de pulvérisation et de soufflage des déchets végétaux, alors que l'unité de commande (102) a commandé l'actionneur (50) dudit panneau récupérateur (10) de déplacer l'obturateur (47) de l'une des positions de pulvérisation et de soufflage des déchets végétaux à l'autre des positions de pulvérisation et de soufflage des déchets végétaux, et
- envoyer une alerte à un opérateur au moyen de l'interface utilisateur (103) reliée à l'unité de commande (102), lorsqu'une anomalie de fonctionnement de l'obturateur (47) et/ou de l'actionneur (50) dudit panneau récupérateur (10) est ainsi détectée.

15. Engin agricole (100) selon la revendication 14, comprenant l'unité de commande (102) et un deuxième dispositif de détection (105) des déchets végétaux monté sur le ou l'un au moins des panneaux récupérateurs, le ou chaque deuxième dispositif de détection (105) des déchets végétaux étant conçu pour envoyer un signal de détection à l'unité de commande (102), lorsque ledit deuxième dispositif de détection (105) des déchets végétaux détecte des déchets végétaux retenus sur la surface supérieure (20) de la grille de filtrage (19) du panneau récupérateur (10) sur lequel le deuxième dispositif de détection des déchets (105) végétaux est monté, à une hauteur, prise par rapport à la surface supérieure (20) de la grille de filtrage (19), supérieure ou égale à une hauteur seuil, l'unité de commande (102) étant conçue pour envoyer une alerte à un opérateur au moyen de l'interface utilisateur (103) reliée à ladite unité de commande (102), lorsque l'unité de commande (102) reçoit un signal de détection du deuxième dispositif de détection (105) des déchets végétaux.

## Patentansprüche

1. Auffangplatte (10) für landwirtschaftliches Sprühsystem (200), wobei sich die Auffangplatte (10) global gemäß einer vertikalen Richtung (Z) von unten nach oben zwischen einer Basis (11) und einer Spitze (12) erstreckt und umfasst:
- eine Luftleitung (13), die eine Lufteinlassöffnung (17) umfasst, über die die Luftleitung (13) mit Luft versorgt wird,
- einen Auffangbehälter (15), der die Basis (11) der Auffangplatte (10) bildet und eine Auffangöffnung (18) umfasst, über die der Auffangbehälter (15) bestimmt ist, Behandlungsflüssigkeit aufzufangen, das überschüssig auf die zu behandelnden Pflanzen gesprüht wurde, wobei sich die Auffangöffnung (18) um eine global vertikale Achse erstreckt und nach oben ausgerichtet ist, wobei die Auffangöffnung (18) ferner mindestens zum Teil durch ein Filtergitter (19) besetzt ist, das ausgelegt ist, um die Zirkulation von überschüssig versprühter Behandlungsflüssigkeit zum Auffangbehälter (15) zu gestatten und um pflanzliche Abfälle auf einer oberen Oberfläche (20) des Filtergitters (19) zurückzuhalten, die dem Auffangbehälter (15) vertikal gegenüber ist,
wobei die Auffangplatte (10) **dadurch gekennzeichnet ist, dass** sie weiterhin mindestens eine Blasöffnung (21) umfasst, die mit der Luftleitung (13) oder einer zusätzlichen Luftleitung kommuniziert und ausgelegt ist, um einen Luftstrahl zu erzeugen, der über die obere Oberfläche (20) des Filtergitters (19) derart streicht, dass er auf die pflanzlichen Abfälle bläst, die auf der oberen Oberfläche (20) des Filtergitters (19) zurückgehalten werden.

2. Auffangplatte (10) nach Anspruch 1, wobei sich die obere Oberfläche (20) des Filtergitters (19) unterhalb der Blasöffnung(en) (21) befindet und mit der/den Blasöffnung(en) (21) bündig ist.

3. Auffangplatte (10) nach Anspruch 1 oder Anspruch 2, wobei die Auffangöffnung (18) von einem Rand (22) begrenzt ist, der einen ersten und einen zweiten Randabschnitt (23, 24) umfasst, die sich global gemäß einer horizontalen Längsrichtung (X) parallel zueinander erstrecken, wobei der erste Randabschnitt (23) der/den Blasöffnung(en) (21) zugewandt eingerichtet ist, wobei der zweite Randabschnitt (24) frei ist, wobei das Filtergitter (19) die Auffangöffnung (18) gemäß einer horizontalen Querrichtung (Y), die senkrecht zur Längsrichtung (X) ist, ab dem ersten Randabschnitt (23) bis zum zweiten Randabschnitt (24) belegt, und wobei die Blasöffnung(en) (21) eingerichtet ist/sind, um einen Luftstrahl zu erzeugen, der global quer ausgerichtet ist, über die obere Oberfläche (20) des Filtergitters (19) derart streicht, dass er auf die pflanzlichen Abfälle, die durch die obere Oberfläche (20) des Filtergitters (19) zurückgehalten werden, ab dem ersten Randabschnitt (23) zum freien zweiten Randabschnitt (24) der Auffangöffnung (18) bläst und so die pflanzlichen Abfälle entfernt.

4. Auffangplatte (10) nach Anspruch 3, wobei das Filtergitter (19) eine erste und eine zweite Kante (25, 26) umfasst, die sich global längs parallel zueinander erstrecken und durch die obere Oberfläche (20) quer miteinander verbunden sind, wobei die erste Kante (25) des Filtergitters (19) dem ersten Randabschnitt (23) zugewandt eingerichtet ist, wobei die zweite Kante (26) des Filtergitters (19) dem zweiten Randabschnitt (24) zugewandt eingerichtet ist und wobei die Blasöffnungen (21) entlang der ersten Kante (25) des Filtergitters (19) verteilt sind.

5. Auffangplatte (10) nach Anspruch 3 oder Anspruch 4, wobei sich die oder jede Blasöffnung (21) um eine Blasachse (27) erstreckt, die global quer ausgerichtet ist.

6. Auffangplatte (10) nach einem der Ansprüche 1 bis 5, die mindestens eine Sprühanordnung (14) umfasst, die ausgelegt ist, um eine Behandlungsflüssigkeit auf zu behandelnde Pflanzen zu sprühen, wobei die oder jede Sprühanordnung (14) einen Luftverteiler (16) umfasst, der mit der Luftleitung (13) kommuniziert und ausgelegt ist, um einen Luftstrom zu erzeugen, der die Behandlungsflüssigkeit auf die zu behandelnden Pflanzen trägt oder bläst.

7. Auffangplatte (10) nach Anspruch 6, wobei die Luftleitung (13) mindestens zum Teil im Inneren eines Strukturteils (28) der Auffangplatte (10) gebildet ist, wobei die Luftleitung (13) eine erste Luftführung (38) umfasst, die zum einem mit der Lufteinlassöffnung (17) und zum anderen mit dem oder den Luftverteilern (16) kommuniziert, und eine zweite Luftführung (39), die zum einen mit der Lufteinlassöffnung (17) parallel zur ersten Luftführung (38) und zum anderen mit der oder den Blasöffnungen (21) kommuniziert, wobei die Auffangplatte (10) ferner einen Verschluss (47) umfasst, der im Verhältnis zum Strukturteil (28) beweglich ist und der im Inneren der Luftleitung (13) eingerichtet ist, wobei der Verschluss (47) ferner ausgelegt ist, um selektiv eine Sprühposition einzunehmen, in der der Verschluss (47) die erste Luftführung (38) freigibt und die zweite Luftführung (39) verschließt, der oder den Blasöffnungen (21) vorgelagert, und eine Blasposition der pflanzliche Abfälle, in der der Verschluss (47) die erste Luftführung (38) verschließt, der oder den Sprühanordnungen (14) vorgelagert, und die zweite Luftführung (39) freigibt.

8. Auffangplatte (10) nach Anspruch 7, wobei der Verschluss (47) eine Klappe (48) umfasst, die auf dem Strukturteil (28) im Inneren der Luftleitung (13) um eine Schwenkachse (49) zwischen der Sprühposition und der Blasposition der Pflanzen schwenkend angebracht ist.

9. Auffangplatte (10) nach Anspruch 7 oder Anspruch 8, die einen Aktuator (50) umfasst, der ausgelegt ist, um den Verschluss (47) im Verhältnis zum Strukturteil (28) zwischen der Sprühposition und der Blasposition der pflanzlichen Abfälle zu verschieben.

10. Landwirtschaftliches Sprühsystem (200) für ein landwirtschaftliches Gerät (100), das mindestens eine Auffangplatte (10) nach einem der Ansprüche 1 bis 9 umfasst.

11. Landwirtschaftliches Gerät (100), das ein landwirtschaftliches Sprühsystem (200) nach Anspruch 10 umfasst.

12. Landwirtschaftliches Gerät (100) nach Anspruch 11, wobei das landwirtschaftliche Sprühsystem (200) mindestens eine Auffangplatte (10) nach Anspruch 9 umfasst, wobei das landwirtschaftliche Gerät (100) eine Steuereinheit (102) umfasst, die ausgelegt ist, um den Aktuator (50) zu steuern, den Verschluss (47) aus der Sprühposition in die Blasposition der pflanzlichen Abfälle und/oder aus der Blasposition der pflanzlichen Abfälle in die Sprühposition zu verschieben.

13. Landwirtschaftliches Gerät (100) nach Anspruch 12, wobei die Steuereinheit (102) ausgelegt ist, um den Aktuator (50) zu steuern, den Verschluss (47) aus der Sprühposition in die Blasposition der pflanzlichen Abfälle und/oder aus der Blasposition der pflanzlichen Abfälle in die Sprühposition zu verschieben, wenn die Steuereinheit (102) einen Befehl erhält, der von einem Bediener mittels einer Benutzerschnittstelle (103) geschickt wird, die mit der Steuereinheit (102) verbunden ist.

14. Landwirtschaftliches Gerät (100) nach Anspruch 13, wobei die Steuereinheit (102) ausgelegt ist, um:
- eine Funktionsanomalie des Verschlusses (47) und/oder des Aktuators (50) der oder einer der Auffangplatten (10) mittels einer ersten Detektionsvorrichtung (104) zu ermitteln, die auf der oder jeder der Auffangplatten (10) angebracht ist, wenn der Verschluss (47) der Auffangplatte (10) weder die Sprühposition noch die Blasposition der pflanzlichen Abfälle belegt oder wenn der Verschluss (47) der Auffangplatte (10) eine von der Sprühposition und Blasposition der pflanzlichen Abfälle belegt, währenddessen die Steuereinheit (102) den Aktuator (50) der Auffangplatte (10) gesteuert hat, den Verschluss (47) aus der einen von der Sprühposition und der Blasposition der pflanzlichen Abfälle in die andere von der Sprühposition und der Blasposition der pflanzlichen Abfälle zu verschieben, und
- dem Bediener mittels der Benutzerschnittstelle (103), die mit der Steuereinheit (102) verbunden ist, eine Warnmeldung zu senden, wenn somit eine Funktionsanomalie des Verschlusses (47) und/oder des Aktuators (50) der Auffangplatte (10) ermittelt ist.

15. Landwirtschaftliches Gerät (100) nach Anspruch 14, die die Steuereinheit (102) und eine zweite Detektionsvorrichtung (105) der pflanzlichen Abfälle umfasst, die auf der oder mindestens einer der Auffangplatten angebracht ist, wobei die oder jede zweite Detektionsvorrichtung (105) der pflanzlichen Abfälle ausgelegt ist, um ein Detektionssignal an die Steuereinheit (102) zu senden, wenn die zweite Detektionsvorrichtung (105) der pflanzlichen Abfälle pflanzliche Abfälle ermittelt, die auf der oberen Oberfläche (20) des Filtergitters (19) der Auffangplatte (10) zurückgehalten sind, auf der die zweite Detektionsvorrichtung der pflanzlichen Abfälle (105) in einer Höhe, ermittelt im Verhältnis zur oberen Oberfläche (20) des Filtergitters (19) angebracht ist, die größer oder gleich einer Grenzhöhe ist, wobei die Steuereinheit (102) ausgelegt ist, um einem Bediener mittels der Benutzerschnittstelle (103), die mit der Steuereinheit (102) verbunden ist, eine Warnmeldung zu senden, wenn die Steuereinheit (102) ein Detektionssignal von der zweiten Detektionsvorrichtung (105) der pflanzlichen Abfälle empfängt.

## Claims

1. A recovery panel (10) for an agricultural spraying system (200), the recovery panel (10) overall extending along a vertical direction (Z) upwardly between a bottom (11) and a top (12), and comprising:
- an air duct (13) comprising an air inlet port (17) through which the air duct (13) is supplied with air,
- a recovery tray (15) forming the bottom (11) of the recovery panel (10) and including a recovery opening (18) through which the recovery tray (15) is to recover surplus sprayed treatment liquid on the plants to be treated, the recovery opening (18) extending about an overall vertical axis and being oriented upwards, the recovery opening (18) being further occupied, at least partly, by a filter grid (19) designed to allow circulation of surplus sprayed treatment liquid to the recovery tray (15) and to retain plant waste on an upper surface (20) of the filter grid (19), which is vertically opposite to the recovery tray (15),
the recovery panel (10) being **characterised in that** it further comprises at least one blow-out port (21) communicating with the air duct (13) or an additional air duct and designed to produce an air jet sweeping across the upper surface (20) of the filter grid (19), so as to blow on the plant waste retained on the upper surface (20) of the filter grid (19).

2. The recovery panel (10) according to claim 1, wherein the upper surface (20) of the filter grid (19) is located beneath the blow-out port(s) (21) and is flush with the blow-out port(s) (21).

3. The recovery panel (10) according to claim 1 or claim 2, wherein the recovery opening (18) is delimited by an edge (22) comprising first and second edge portions (23, 24) overall extending along a horizontal longitudinal direction (X), in parallel with each other, the first edge portion (23) being arranged facing the blow-out port(s) (21), the second edge portion (24) being free, wherein the filter grid (19) occupies the recovery opening (18) along a horizontal transverse direction (Y) perpendicular to the longitudinal direction (X), from the first edge portion (23) to the second edge portion (24), and wherein the blow-out port(s) (21) is (are) designed to produce an overall transversely oriented air jet sweeping across the upper surface (20) of the filter grid (19) so as to blow on the plant waste retained by the upper surface (20) of the filter grid (19), from the first edge portion (23) to the second, free, edge portion (24) of the recovery opening (18), and thereby discharge the plant waste.

4. The recovery panel (10) according to claim 3, wherein the filter grid (19) comprises a first and a second edges (25, 26) overall extending longitudinally, in parallel to each other, and transversely connected to each other through the upper surface (20), the first edge (25) of the filter grid (19) being arranged facing the first edge portion (23), the second edge (26) of the filter grid (19) being arranged facing the second edge portion (24), and wherein the blow-out ports (21) are distributed along the first edge (25) of the filter grid (19).

5. The recovery panel (10) according to claim 3 or claim 4, wherein the or each blow-out port (21) extends about an overall transversely oriented blow-out axis (27).

6. The recovery panel (10) according to any of claims 1 to 5, comprising at least one spraying assembly (14) designed to spray a treatment liquid onto plants to be treated, the or each spraying assembly (14) comprises an air diffuser (16) communicating with the air duct (13) and designed to produce an air stream carrying or blowing the treatment liquid onto the plants to be treated.

7. The recovery panel (10) according to claim 6, wherein the air duct (13) is at least partly formed inside a structural part (28) of the recovery panel (10), wherein the air duct (13) comprises a first air duct (38) communicating on the one hand with the air inlet port (17) and on the other hand with the air diffuser(s) (16), and a second air duct (39) communicating on the one hand with the air inlet port (17), in parallel with the first air duct (38), and on the other hand with the blow-out port(s) (21), the recovery panel (10) further comprising a shutter (47) which is movable relative to the structural part (28) and which is arranged inside the air duct (13), the shutter (47) being further designed to selectively occupy a spray position in which the shutter (47) releases the first air duct (38) and shuts off the second air duct (39), upstream of the blow-out port(s) (21), and a plant waste blow-out position in which the shutter (47) shuts off the first air duct (38), upstream of the spraying assembly(ies) (14), and releases the second air duct (39).

8. The recovery panel (10) according to claim 7, wherein the shutter (47) comprises a flap (48) pivotably mounted to the structural part (28), inside the air duct (13), about a pivot axis (49), between the spray position and the plant blow-out position.

9. The recovery panel (10) according to claim 7 or claim 8, comprising an actuator (50) designed to movably drive the shutter (47) relative to the structural part (28) between the spray position and the plant waste blow-out position.

10. An agricultural spraying system (200) for an agricultural machine (100), comprising at least one recovery panel (10) according to any of claims 1 to 9.

11. An agricultural machine (100) comprising an agricultural spraying system (200) according to claim 10.

12. The agricultural machine (100) according to claim 11, wherein the agricultural spraying system (200) comprises at least one recovery panel (10) according to claim 9, the agricultural machine (100) comprising a control unit (102) designed to command the actuator (50) to move the shutter (47) from the spray position to the plant waste blow-out position and/or from the plant waste blow-out position to the spray position.

13. The agricultural machine (100) according to claim 12, wherein the control unit (102) is designed to command the actuator (50) to move the shutter (47) from the spray position to the plant waste blow-out position and/or from the plant waste blow-out position to the spray position, when the control unit (102) receives a command sent by an operator by means of a user interface (103) connected to said control unit (102).

14. The agricultural machine (100) according to claim 13, wherein the control unit (102) is designed to:
- detect an operating anomaly of the shutter (47) and/or the actuator (50) of the or one of the recovery panels (10), by means of a first detection device (104) mounted to the or each of the recovery panels (10), when the shutter (47) of said recovery panel (10) occupies neither the spray position, nor the plant waste blow-out position, or the shutter (47) of said recovery panel (10) occupies one of the spray and plant waste blow-out positions, while the control unit (102) has commanded the actuator (50) of said recovery panel (10) to move the shutter (47) from one of the spray and plant waste blow-out positions to the other of the spray and plant waste blow-out positions, and
- send an alert to an operator by means of the user interface (103) connected to the control unit (102), when an operating anomaly of the shutter (47) and/or the actuator (50) of said recovery panel (10) is thus detected.

15. The agricultural machine (100) according to claim 14, comprising the control unit (102) and a second plant waste detection device (105) mounted to the or at least one of the recovery panels, the or each second plant waste detection device (105) being designed to send a detection signal to the control unit (102), when said second plant waste detection device (105) detects plant waste retained on the upper surface (20) of the filter grid (19) of the recovery panel (10) to which the second plant waste detection device (105) is mounted, at a height, taken with respect to the upper surface (20) of the filter grid (19), greater than or equal to a threshold height, the control unit (102) being designed to send an alert to an operator by means of the user interface (103) connected to said control unit (102), when the control unit (102) receives a detection signal from the second plant waste detection device (105).
